# EUROPEAN PATENT APPLICATION

(11) **EP 4 750 191 A1**
(43) Date of publication of application: **27.05.2026**
(21) Application number: 23945464.8
(22) Date of filing: 19.07.2023
(51) Int. Cl.: H04W 72/0446

(54) **COMMUNICATION METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/108238
(87) International publication number: WO 2025/015574

(57) **Abstract**

Embodiments of the present disclosure provide a communication method. The method is executed by a terminal, and comprises: determining that resources in a first resource set and/or a second resource set overlap with a subband full duplex (SBFD) time unit, wherein The first resource set comprises at least one first resource, the second resource set comprises at least one second resource, the first resource is a time domain resource and/or a frequency domain resource where an effective random access channel occasion (RO) is located, and the time domain resource of the second resource is a time unit of which the resource position is before the resource position of the time domain resource of the first resource. The embodiments of the present disclosure can improve resource utilization efficiency.

## Description

### TECHNICAL FIELD

Embodiments of the disclosure relate to the field of communication technology, and in particular to a communication method, a user equipment (UE), a network device, and a storage medium.

### BACKGROUND

In wireless communication technology, there are downlink (DL) symbols, uplink (UL) symbols, flexible (F) symbols, and subband full duplex (SBFD) symbols. A symbol that contains both DL and UL subbands in a frequency domain may be called an SBFD symbol. Similarly, when a slot contains at least one SBFD symbol among its multiple symbols, the slot may be called an SBFD slot.

### SUMMARY

Embodiments of the disclosure provide a communication method, a UE, a network device, and a storage medium.

According to a first aspect of embodiments of the disclosure, a communication method is provided, which is performed by a UE. The method includes: determining an overlap between resources in a first resource set and/or a second resource set and a subband full duplex (SBFD) time unit. The first resource set includes at least one first resource. The second resource set includes at least one second resource. The first resource is a time-domain resource and/or a frequency-domain resource where a valid random access channel occasion (RO) is located. A time-domain resource of the second resource is a time unit before the time-domain resource of the first resource.

According to a second aspect of embodiments of the disclosure, a communication method is provided, which is performed by a network device. The method includes: determining an overlap between resources in a first resource set and/or a second resource set and a SBFD time unit. The first resource set includes at least one first resource. The second resource set includes at least one second resource. The first resource is a time-domain resource and/or a frequency-domain resource where a valid RO is located. A time-domain resource of the second resource is a time unit before the time-domain resource of the first resource.

According to a third aspect of embodiments of the disclosure, a communication method is provided, which is performed by a communication system. The method includes: sending by a network device, first information to a UE, in which the first information is configured to determine a first resource set, and time-domain positions of resources in the first resource set and/or a second resource set overlap with a SBFD time unit; and receiving by the UE, the first information.

According to a fourth aspect of embodiments of the disclosure, a UE is provided, the UE including a processing module, configured to determine an overlap between resources in a first resource set and/or a second resource set and a SBFD time unit. The first resource set includes at least one first resource. The second resource set includes at least one second resource. The first resource is a time-domain resource and/or a frequency-domain resource where a valid RO is located. A time-domain resource of the second resource is a time unit whose resource position is before a resource position of the time-domain resource of the first resource.

According to a fifth aspect of embodiments of the disclosure, a network device is provided, the network device including a processing module, configured to determine an overlap between resources in a first resource set and/or a second resource set and a SBFD time unit. The first resource set includes at least one first resource. The second resource set includes at least one second resource. The first resource is a time-domain resource and/or a frequency-domain resource where a valid RO is located. A time-domain resource of the second resource is a time unit whose resource position is before a resource position of the time-domain resource of the first resource.

According to a sixth aspect of embodiments of the disclosure, a communication system is provided, the communication system including a UE and a network device. The UE is configured to implement any communication method performed by the UE. The network device is configured to implement any communication method performed by the network device.

According to a seventh aspect of embodiments of the disclosure, a UE is provided, the UE including one or more processors. The UE is used to perform any communication method implemented in the UE.

According to an eighth aspect of embodiments of the disclosure, a network device is provided, the network device including one or more processors. The network device is used to perform any communication method implemented in the network device.

According to a ninth aspect of embodiments of the disclosure, a storage medium is provided storing instructions that, when executed on a communication device, cause the communication device to perform the communication method according to the first or second aspect.

It should be understood that the above general description and the following detailed description are exemplary and explanatory only, and are not intended to limit embodiments of this disclosure.

### BRIEF DESCRIPTION OF THE DRAWINGS

The accompanying drawings, which are incorporated in and form a part of the specification, illustrate embodiments of the disclosure and serve to explain the principles of embodiments of the disclosure together with the description.
FIG. la is a diagram of an architecture of a communication system according to an exemplary embodiment.
FIG. 1b is a diagram illustrating a time-frequency resource according to an exemplary embodiment.
FIG. lc is a diagram illustrating a time-frequency resource according to an exemplary embodiment.
FIG. 1d is a diagram illustrating a time-frequency resource according to an exemplary embodiment.
FIG. 2a is a flowchart illustrating a communication method according to an exemplary embodiment.
FIG. 2b is a diagram illustrating a time-frequency-domain resource according to an exemplary embodiment.
FIG. 2c is a diagram illustrating a time-frequency-domain resource according to an exemplary embodiment.
FIG. 3a is a flowchart illustrating a communication method according to an exemplary embodiment.
FIG. 3b is a flowchart illustrating a communication method according to an exemplary embodiment.
FIG. 4a is a flowchart illustrating a communication method according to an exemplary embodiment.
FIG. 4b is a flowchart illustrating a communication method according to an exemplary embodiment.
FIG. 5a is a flowchart illustrating a communication method according to an exemplary embodiment.
FIG. 6a is a flowchart illustrating a communication method according to an exemplary embodiment.
FIG. 7a is a block diagram of a UE according to an exemplary embodiment.
FIG. 7b is a block diagram of a network device according to an exemplary embodiment.
FIG. 8a is a block diagram of a user equipment (UE) according to an exemplary embodiment.
FIG. 8b is a block diagram of a communication device according to an exemplary embodiment.

### DETAILED DESCRIPTION

The disclosure provides a communication method, a UE, a network device, and a storage medium.

In a first aspect, embodiments of the disclosure provide a communication method, which is performed by a UE. The method includes: determining an overlap between resources in a first resource set and/or a second resource set and a subband full duplex (SBFD) time unit. The first resource set includes at least one first resource. The second resource set includes at least one second resource. The first resource is a time-domain resource and/or a frequency-domain resource where a valid random access channel occasion (RO) is located. A time-domain resource of the second resource is a time unit whose resource position is before a resource position of the time-domain resource of the first resource.

In the above embodiment, since the UE determines that the resources in the first resource set and/or the second resource set overlap with the SBFD time unit, the UE may perform physical random access channel (PRACH) access in the SBFD time unit and simultaneously perform DL data transmission reception. Compared with the situation where only the PRACH access may be performed in the SBFD time unit, DL and UL resources in the SBFD time unit may be utilized efficiently, and the efficiency of resource utilization is thus improved.

In combination with some embodiments of the first aspect, in some embodiments, the method further includes at least one of: determining, according to a predetermined protocol, that the resources in the first resource set and/or the second resource set are capable of overlapping with the SBFD time unit; or receiving configuration information and determining, according to the configuration information, that the resources in the first resource set and/or the second resource set are capable of overlapping with the SBFD time unit.

In some embodiments, the UE may determine, according to the predetermined protocol and/or the received first information, whether the resources in the first resource set and/or the second resource set are capable of overlapping with the SBFD time unit, which makes the determination method more flexible.

In combination with some embodiments of the first aspect, in some embodiments, a frequency-domain resource of the second resource is the same as the frequency-domain resource of the first resource.

In the above embodiment, since the frequency-domain resource of the second resource is the same as that of the first resource, the same transmission processing may be performed on the first resource and the second resource.

In combination with some embodiments of the first aspect, in some embodiments, the method further includes: receiving first information, in which the first information is configured to determine the first resource set, and a time-domain position of the resources in the first resource set and/or the second resource set overlaps with the SBFD time unit.

In the above embodiment, since the first information may be used to determine the first resource set, and the time-domain position of the resources in the first resource set and/or the second resource set overlaps with the SBFD time unit, after the UE receives the first information, the UE may use the resources in the first resource set and/or the second resource set to perform the corresponding transmission operation.

In combination with some embodiments of the first aspect, in some embodiments, the method further includes: receiving a first signaling, in which the first signaling indicates that a DL time unit is configured as the SBFD time unit.

In the above embodiment, the DL time unit may be configured as the SBFD time unit via the first signaling.

In combination with some embodiments of the first aspect, in some embodiments, the method further includes: determining that the UE does not expect that the SBFD time unit included in the first resource and/or the second resource is configured as a DL time unit.

In the above embodiment, since the UE does not expect that the SBFD time unit included in the first resource and/or the second resource is configured as the DL time unit, the network device may not configure the SBFD time unit included in the first resource and/or the second resource as the DL time unit.

In combination with some embodiments of the first aspect, in some embodiments, determining that the UE does not expect that the SBFD time unit included in the first resource and/or the second resource is configured as the DL time unit includes: determining that the UE does not expect to receive a second signaling, in which the second signaling is used to configure the SBFD time unit included in the first resource and/or the second resource as the DL time unit.

In the above embodiment, since the UE does not expect to receive the second signaling, the network device may not configure the SBFD time unit included in the first resource and/or the second resource as the DL time unit via the second signaling.

In combination with some embodiments of the first aspect, in some embodiments, the method further includes: determining that the UE does not expect that the frequency-domain resource of the first resource and a frequency-domain resource of the second resource overlap with a non-UL transmission frequency range in the SBFD time unit.

In the above embodiment, since the UE does not expect that the frequency-domain resources of the first resource and the second resource overlap with the non-UL transmission frequency range in the SBFD time unit, the network device may not configure that the frequency-domain resources of the first resource and the second resource overlap with the non-UL transmission frequency range in the SBFD time unit.

In combination with some embodiments of the first aspect, in some embodiments, determining that the UE does not expect that the frequency-domain resource of the first resource and/or the frequency-domain resource of the second resource overlap with the non-UL transmission frequency range in the SBFD time unit includes: determining that the first resource and the second resource comprise the SBFD time unit, and determining that the UE does not expect that the frequency-domain resource of the first resource and the frequency-domain resource of the second resource overlap with the non-UL transmission frequency range in the SBFD time unit.

In the above embodiment, when the first resource and the second resource include the SBFD time unit, since the UE does not expect that the frequency -domain resources of the first resource and the second resource overlap with the non-UL transmission frequency range in the SBFD time unit, the network device may not configure that the frequency-domain resources of the first resource and the second resource overlap with the non-UL transmission frequency range in the SBFD time unit.

In combination with some embodiments of the first aspect, in some embodiments, the first signaling is a semi-static signaling or a dynamic signaling, and/or the second signaling is a semi-static signaling or a dynamic signaling.

In combination with some embodiments of the first aspect, in some embodiments, the semi-static signaling is an SBFD symbol configuration signaling.

In combination with some embodiments of the first aspect, in some embodiments, the dynamic signaling is a downlink control information (DCI) signaling.

In combination with some embodiments of the first aspect, in some embodiments, the method further includes: determining, according to the first resource set, a third resource set and a fourth resource set. The third resource set includes at least one third resource, the third resource is a resource in the first resource set actually used for PRACH transmission; the fourth resource set includes at least one fourth resource, the fourth resource is a resource in the first resource set other than the third resource.

In the above embodiment, since the first resource set is divided into the third resource set and the fourth resource set, different operations may be performed on the resources in the third resource set and the fourth resource set.

In combination with some embodiments of the first aspect, in some embodiments, the method further includes one of: determining that the third resource and/or the second resource overlap with a time unit for transmitting a DL signal, and canceling reception of the DL signal; or determining that a time unit where the third resource is located is the SBFD time unit, and the third resource and/or the second resource overlap with a time unit for transmitting a DL signal, and receiving the DL signal.

In the above embodiment, when it is determined that the third resource and/or the second resource overlap with the time unit for transmitting the DL signal, reception of the DL signal may be canceled (i.e., reception of the DL signal is not performed); when it is determined that the time unit where the third resource is located is the SBFD time unit and the third resource and/or the second resource overlap with the time unit for transmitting the DL signal, the DL signal may be received (i.e., reception of the DL signal is performed). In this way, the signal transmission processing method may be more flexible.

In combination with some embodiments of the first aspect, in some embodiments, the method further includes: determining that a time unit where the fourth resource is located is the SBFD time unit, and the fourth resource and/or the second resource overlap with a time unit for transmitting a DL signal, and receiving the DL signal.

In the above embodiment, when it is determined that the time unit where the fourth resource is located is the SBFD time unit and the fourth resource and/or the second resource overlap with the time unit for transmitting the DL signal, the DL signal may be received.

In combination with some embodiments of the first aspect, in some embodiments, the method further includes: determining that a time unit where the first resource is located is the SBFD time unit, and the first resource and/or the second resource overlap with a time unit for transmitting a DL signal, and receiving the DL signal.

In the above embodiment, when the time unit where the first resource is located is SBFD and the first resource and/or the second resource overlap with the time unit for transmitting the DL signal, the DL signal may be received.

In combination with some embodiments of the first aspect, in some embodiments, receiving the DL signal includes: receiving the DL signal according to a priority of the DL signal.

In the above embodiment, the DL signals may be received according to the priorities of the DL signals. Thus, in the case of resource overlap, a DL signal with high priority may be received first.

In combination with some embodiments of the first aspect, in some embodiments, receiving the DL signal according to the priority of the DL signal includes: receiving a high-priority DL signal, in which the high-priority DL signal comprises at least one of a DL signal indicated by DCI, or a DL ultra-reliable low-latency communications (URLLC) signal.

In the above embodiment, the high-priority DL signal may be received preferentially.

In the above embodiments, a second aspect of the disclosure provides a communication method, which is performed by a network device. The method includes: determining an overlap between resources in a first resource set and/or a second resource set and a SBFD time unit. The first resource set includes at least one first resource. The second resource set includes at least one second resource. The first resource is a time-domain resource and/or a frequency-domain resource where a valid RO is located. A time-domain resource of the second resource is a time unit before the time-domain resource of the first resource.

In combination with some embodiments of the second aspect, in some embodiments, the method further includes: sending configuration information, in which the configuration information is used by the UE to determine whether the resources in the first resource set and/or the second resource set are capable of overlapping with the SBFD time unit.

In combination with some embodiments of the second aspect, in some embodiments, a frequency-domain resource of the second resource is the same as the frequency-domain resource of the first resource.

In combination with some embodiments of the second aspect, in some embodiments, the method further includes: sending first information, in which the first information is configured to determine the first resource set, and a time-domain position of the resources in the first resource set and/or the second resource set overlap with the SBFD time unit.

In combination with some embodiments of the second aspect, in some embodiments, the method includes: sending a first signaling, in which the first signaling indicates that a DL time unit is configured as the SBFD time unit.

In combination with some embodiments of the second aspect, in some embodiments, the first signaling is a semi-static signaling or a dynamic signaling.

In combination with some embodiments of the second aspect, in some embodiments, the semi-static signaling is an SBFD symbol configuration signaling.

In combination with some embodiments of the second aspect, in some embodiments, the dynamic signaling is a DCI signaling.

In a third aspect, embodiments of the disclosure provide a communication method, which is performed by a communication system. The method includes: sending by a network device, first information to a UE, in which the first information is configured to determine a first resource set, and time-domain positions of resources in the first resource set and/or a second resource set overlap with a SBFD time unit; and receiving by the UE, the first information.

In a fourth aspect, embodiments of the disclosure provide a UE, including: a processing module, configured to determine an overlap between resources in a first resource set and/or a second resource set and a SBFD time unit. The first resource set includes at least one first resource. The second resource set includes at least one second resource. The first resource is a time-domain resource and/or a frequency-domain resource where a valid RO is located. A time-domain resource of the second resource is a time unit whose resource position is before a resource position of the time-domain resource of the first resource.

In a fifth aspect, embodiments of the disclosure provide a network device, the including a processing module, configured to determine an overlap between resources in a first resource set and/or a second resource set and a SBFD time unit. The first resource set includes at least one first resource. The second resource set includes at least one second resource. The first resource is a time-domain resource and/or a frequency-domain resource where a valid RO is located. A time-domain resource of the second resource is a time unit whose resource position is before a resource position of the time-domain resource of the first resource.

In a sixth aspect, embodiments of the disclosure provide a communication system including a UE and an access network device. The UE is configured to perform the communication method described in the optional implementations of the first aspect. The access network device is configured to perform the communication method described in the optional implementations of the second aspect.

In a seventh aspect, embodiments of the disclosure provide a UE including one or more processors. The UE is used to perform any communication method in the first aspect.

In an eighth aspect, embodiments of the disclosure provide a network device including one or more processors. The network device is used to perform any communication method in the second aspect.

In a ninth aspect, embodiments of the disclosure provide a storage medium storing instructions that, when executed on a communication device, cause the communication device to perform the communication method described in the optional implementations of the first or second aspect.

In a tenth aspect, embodiments of the disclosure provide a program product that, when executed by a communication device, causes the communication device to perform the method as described in the optional implementations of the first or second aspects.

In an eleventh aspect, embodiments of the disclosure provide a computer program that, when running on a computer, causes the computer to perform the method described in the optional implementations of the first or second aspects.

In a twelfth aspect, embodiments of the disclosure provide a chip or chip system, including a processing circuitry configured to perform the method described in the optional implementations of the first or second aspects.

It may be understood that the above UE, storage medium, program product, computer program, chip, or chip system are all used to perform the method disclosed in embodiments of the disclosure. Therefore, for the beneficial effects achievable reference may be made to the beneficial effects of the corresponding methods, which will not be repeated here.

The disclosure provides a communication method, a UE, a network device, and a storage medium. In some embodiments, the terms "communication method", "information processing method", and "information transmission method" may be used interchangeably, and the terms "communication system" and "information processing system" may be also used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined: in addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments disclosed herein, "a plurality of/multiple" means two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that..", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and device, etc. may be interpreted as physical or virtual, and their names are not limited to the names used in embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the "access network device (AN device)" may be referred as "radio access network device (RAN device)", "base station (BS)", "radio base station", "fixed station". In some embodiments, they may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)".

In some embodiments, the "terminal" or "terminal device" may be referred as "user equipment (UE)", "user terminal", "mobile station (MS)", "mobile UE (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

FIG. la is a diagram of an architecture of a communication system according to an exemplary embodiment.

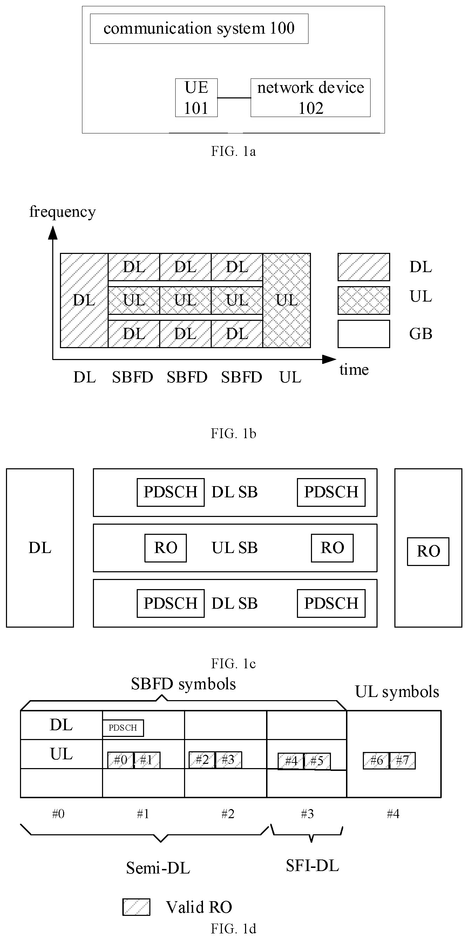

As shown in FIG. 1a, the communication system 100 includes a UE 101 and a network device 102.

In some embodiments, network device 102 may include at least one of an access network device or a core network device.

In some embodiments, the UE 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, for example, a node or device that accesses a UE to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1a, but are not limited herein. The subjects shown in FIG. 1a are examples, and the communication system may include all or part of the subjects in FIG. 1a, or may include other subjects other than those shown in FIG. 1a. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

To better understand embodiments of the disclosure, the following exemplary scenarios are provided.

To improve UL coverage and throughput, duplex enhancement for SBFD has been researched.

In some embodiments, a carrier component (CC) is divided into a plurality of subbands (SBs) in a frequency domain on downlink (DL) or flexible (F) symbols. The SBs include one UL subband and at least one (one or two) DL subbands. The base station may transmit DL signals in the DL subband and simultaneously receive UL signals in the UL subband. The DL or F symbols may be configured via at least one of:
TDD-UL-DL-ConfigC ommon;
TDD-UL-DL-ConfigDedicated;
TDD-UL-DL-ConfigCommon and TDD-UL-DL-ConfigDedicated; or
DCI format 2-0 indication.

A symbol that contains both DL and UL subbands in the frequency domain may be called an SBFD symbol.

In some embodiments, when a slot contains at least one SBFD symbol among a plurality of symbols, the slot may be called an SBFD slot. As shown in FIG. 1b, slot 0 is a DL slot containing 14 DL symbols, slots 1 to 3 are SBFD slots (each slot contains 14 SBFD symbols), and slot 4 is a UL slot containing 14 UL symbols.

In some embodiments, one DL or F symbol may be configured as SBFD via a semi-static signaling, which may be referred to as semi-SBFD. In addition, one DL or F symbol may be indicated as SBFD via a dynamic signaling, which may be called Dynamic-SBFD. In addition, an SBFD symbol may be modified to a DL symbol, a UL symbol, or an F symbol via the dynamic signaling.

In some embodiments, a guard band (GB) may also exist between the DL subband and the UL subband to reduce interference between the DL signals in the DL subband and the UL signals in the UL subband through frequency-domain isolation.

In some embodiments, a frequency range available for UL transmission in the SBFD symbol may be discontinuous, including the following two cases: 1. GB and DL subbands are not available for UL transmission, but UL subbands are available for UL transmission; 2. DL subbands are not available for UL transmission, but UL subbands and GB are available for UL transmission.

In some embodiments, a frequency-domain range in the SBFD symbol that may be used for UL transmission may be referred to as a UL frequency-domain range, and a frequency-domain range that cannot be used for UL transmission may be referred to as a non-UL frequency-domain range (i.e., a range outside the UL frequency-domain range). Based on the above analysis, it may be seen that the UL frequency-domain range of a non-SBFD symbol is different from that of an SBFD symbol. The UL frequency range is a UL frequency range on a CC. In the SBFD symbol, a UL frequency range on a UL bandwidth part (BWP) refers to a frequency range where the UL frequency ranges on the BWP and the CC overlap. Unless otherwise specified, the UL frequency range in the disclosure refers to the UL frequency range on the BWP.

In some embodiments, when the UE is in a radio resource control (RRC) idle state, information such as a received signal strength of a Synchronization Signal/PBCH block (SSB) beam may be measured when initial access to a cell, and an optimal SSB beam may be selected. In a direction of the optimal SSB beam, a PRACH signal is transmitted at an RO to perform random access. In addition, the UE in other states may also send a PRACH signal at an RO to perform random access. The random access includes contention-based random access (CBRA) and contention-free random access (CFRA). In the CBRA, a plurality of UEs may use the same preamble, meaning that PRACH signals of two UEs may conflict, which may lead to a random access failure.

In some embodiments, in the SBFD symbols, the UE may transmit UL signals in a UL SB (i.e., subband). Therefore, configuring ROs in the SBFD symbols may increase a number of ROs compared to configuring ROs only on UL or F symbols. A SBFD-aware UE (that may recognize an SBFD symbol configuration) may perform random access at an RO in the SBFD symbol configuration, reducing the access latency and lowering the probability of a PRACH signal collision between different UEs in the CBRA.

In some embodiments, as shown in FIG. 1c, after the RO is configured, it is determined whether an RO is a valid RO according to a certain criteria. Only the valid RO may be used to send the PRACH signal. In a relevant conflict handling criteria, a symbol where the valid RO is located cannot receive DL signals. When the valid RO is in an SBFD symbol, a DL subband in the symbol where the valid RO is located cannot be used for DL transmission, resulting in a waste of frequency-domain resources in the DL subband. Furthermore, for a conflict between a valid RO and a symbol type, the newly introduced SBFD symbol has not been considered yet. Therefore, the conflict handling criteria for the valid ROs in the SBFD symbol need to be updated.

In some embodiments, Table 1 shows conflict handling methods for the valid ROs under different conditions.

**Table 1**

| Case | Signaling A | Symbol type or Signaling B | Action | Detailed description |
|---|---|---|---|---|
| Case 1 | | Semi-D | Error | For the valid RO and Ngap symbols before the valid RO, the UE does not expect that at least one symbol therein is configured as DL via tdd-UL-DL-ConfigurationCommon or tdd-UL-DL-ConfigurationDedicated |
| Case 2 | Valid RO | SFI-D | Error | For the valid RO and Ngap symbols before the valid RO, the UE does not expect that at least one symbol therein is indicated as DL via Slot Format Indicator index (SFI-index) field in the DCI format 2-0 |
| Case 3 | | any-D | Drop | For the valid RO and Ngap symbols before the valid RO, if |
| | | (PDCCH, PDSCH, or CSI-RS) | D | a DL signal (such as PDCCH, PDSCH or CSI-RS) overlaps with at least one symbol therein, the UE does not receive the DL signal, the DL signal being configured by the RRC or indicated by the DCI. |

In some embodiments, Dynamic D/U may represent a DL/UL transmission indicated by DCI; RRC-D/U may represent a DL/UL transmission configured by the RRC; Any-D/U may represent RRC-D or Dynamic-D; Semi-D/U may represent tdd-UL-DL-ConfigurationCommon or tdd-UL-DL-ConfigurationDedicated configured as DL or UL; SFI-D/U may represent an SFI in the DCI format 2-0 indicating DL or UL; Ngap may be an integer greater than or equal to 0, using a default value in a protocol.

In some embodiments, as shown in FIG. 1d, in the case 1, symbols in slots #1 to #2 are configured as DL via the tdd-UL-DL-ConfigurationCommon or tdd-UL-DL-ConfigurationDedicated, which overlap with symbols at valid ROs #0, #1, #2, #3. The UE does not expect this case to happen.

In some embodiments, as shown in FIG. 1d, in the case 2, a symbol in slot #3 is indicated as DL via SFI, which overlaps with symbols at valid ROs #4, #5. The UE does not expect this case to happen.

In some embodiments, as shown in FIG. 1d, in the case 3, if there is a DL signal is transmitted in the slot #1 which overlaps with the valid RO#0 and its preceding Ngap symbols (i.e., Ngap symbols before the valid RO#0), then the UE will not receive the PDSCH.

In some embodiments, when a DL symbol is configured as a semi-SBFD symbol via a semi-static signaling or indicated as a Dynamic-SBFD symbol via a dynamic signaling, which overlaps with a valid RO and its preceding Ngap symbols, it is in an error (corresponding to the above cases 1 and 2).

In some embodiments, when the DL signal overlaps with the valid RO and its preceding Ngap symbols, reception of the DL signal may be canceled, which causes that frequency-domain resources of a DL subband at the valid RO and its preceding Ngap symbols cannot be used.

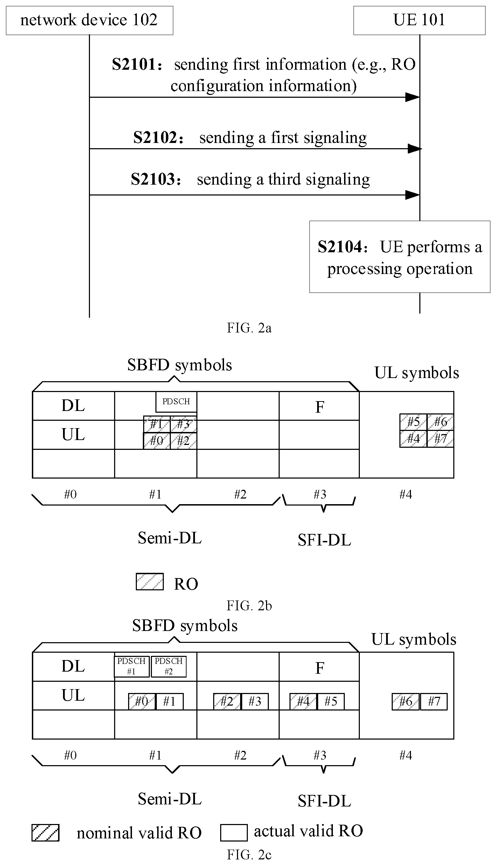

FIG. 2a is an interaction diagram of a communication method according to an embodiment of the disclosure. As shown in FIG. 2a, embodiments of the disclosure relate to a communication method applied into the communication system 100. The method includes the following steps at S2101-S2104.

At S2101, a network device sends first information to a UE.

In some embodiments, the UE receives the first information sent by the network device.

In some embodiments, the UE determines that resources in a first resource set and/or a second resource set overlap with a SBFD time unit.

In some embodiments, the network device determines that the resources in the first resource set and/or the second resource set overlap with the SBFD time unit.

In some embodiments, the UE may determine, according to a predetermined protocol or obtained configuration information, that the resources in the first resource set and/or the second resource set are capable of overlapping with the SBFD time unit.

For example, before the UE receives the first information, the UE may determine, according to the predetermined protocol or the configuration information sent by the network device, that the resources in the first resource set and/or the second resource set are capable of overlapping with the SBFD time unit.

In some embodiments, the network device may determine, according to the predetermined protocol, that the resources in the first resource set and/or the second resource set are capable of overlapping with the SBFD time unit, or the network device may configure that the resources in the first resource set and/or the second resource set are capable of overlapping with the SBFD time unit.

For example, before the network device sends the first information, the network device may determine, according to the predetermined protocol, that the resources in the first resource set and/or the second resource set are capable of overlapping with the SBFD time unit, or the network device may configure that the resources in the first resource set and/or the second resource set are capable of overlapping with the SBFD time unit.

In some embodiments, a time unit may be a symbol, a slot, or a subframe, etc., which is not limited here. For example, the time unit is a symbol.

In some embodiments, each time unit corresponds to a time-frequency domain position.

In some embodiments, the first resource set includes at least one first resource.

In some embodiments, each first resource corresponds to a time-frequency domain position.

In some embodiments, the first resource is a time-domain resource and/or a frequency-domain resource where a valid RO is located.

In some embodiments, the first resource is the time-domain resource and/or frequency-domain resource where the valid RO is located.

In some embodiments, the second resource set includes at least one second resource.

In some embodiments, a frequency-domain resource of the second resource is the same as the frequency-domain resource of the first resource.

In some embodiments, each second resource corresponds to a time-frequency domain position.

In some embodiments, a time-domain resource of the second resource is a time unit whose resource position is before a resource position of the time-domain resource of the first resource.

In some embodiments, the second resource is Ngap symbols before the valid RO, where Ngap is an integer greater than or equal to 0.

In some embodiments, the overlap of resources may be an overlap of time-domain resources and/or frequency-domain resources.

In some embodiments, the UE receives the configuration information sent by the network device, and the UE determines, according to the configuration information, that the resources in the first resource set and/or the second resource set are capable of overlapping with the SBFD time unit.

In some embodiments, the UE determines, according to the predetermined protocol, that the resources in the first resource set and/or the second resource set are capable of overlapping with the SBFD time unit.

In some embodiments, the first information is used to determine the first resource set.

In some embodiments, a time-domain position of the resources in the first resource set and/or the second resource set overlap with the SBFD time unit.

In some embodiments, the first information is RO configuration information. In some embodiments, the UE determines time-frequency domain positions of the ROs within a configuration period of the RO configuration information. It may be determined whether an RO within the configuration period of the RO configuration information is a valid RO according to a first criterion. A resource corresponding to a time-frequency domain position of the valid RO within the configuration period of the RO configuration information may be a first resource. The implementation of the first criterion is not limited in embodiments of the disclosure.

In some embodiments, the ROs within the configuration period of the RO configuration information include valid ROs and invalid ROs. The valid ROs may be determined according to the first criterion.

In some embodiments, all the ROs within the configuration period of the RO configuration information may be the valid ROs, which is not limited here.

In some embodiments, the UE determines the time-frequency domain positions of the ROs within the configuration period of the RO configuration information, and the resources corresponding to the time-frequency domain positions of the ROs within the configuration period of the RO configuration information may be the first resources.

At S2102, the network device sends a first signaling to the UE.

In some embodiments, the UE receives the first signaling sent by the network device.

In some embodiments, the UE receives the first signaling sent by the network device, and the first signaling indicates that a DL time unit is configured as an SBFD time unit.

For example, DL symbols may be configured via a tdd-UL-DL-ConfigurationCommon signaling.

For example, DL symbols may be configured via a tdd-UL-DL-ConfigurationDedicated signaling.

For example, DL symbols may be dynamically indicated via a DCI format 2-0 signaling.

In some embodiments, the UE does not expect that SBFD time unit contained in the first resource and/or the second resource is configured as a DL time unit.

For example, the UE does not expect that at least one of the SBFD symbols contained in the valid RO and its preceding Ngap symbols is configured as a DL symbol.

In some embodiments, the UE does not expect to receive a second signaling, in which the second signaling is used to configure the at least one of the SBFD time unit contained in the first resource and/or the second resource as the DL time unit. This may reduce a number of cases where the SBFD time unit cannot be used to perform random access since the SBFD time unit is configured as the DL time unit.

For example, the UE does not expect to receive the second signaling, in which the second signaling is used to configure the at least one of the SBFD symbols contained in the valid RO and its preceding Ngap symbols as the DL symbol.

In some embodiments, the UE does not expect that the frequency-domain resource of the first resource and/or a frequency-domain resource of the second resource overlap(s) with a non-UL transmission frequency range (a range outside the UL frequency-domain range) in the SBFD time unit.

In some embodiments, the UE determines that the first resource and the second resource include the SBFD time unit, and does not expect that the frequency-domain resource of the first resource and/or the frequency-domain resource of the second resource overlap(s) with the non-UL transmission frequency range in the SBFD time unit.

In some embodiments, when the UE contains an SBFD symbol in the symbols where the valid RO is located and its preceding Ngap symbols, the UE does not expect that the frequency-domain range at the valid RO overlaps with the non-UL transmission frequency range in the SBFD time unit.

In some embodiments, the first signaling is a semi-static signaling or a dynamic signaling, and/or the second signaling is a semi-static signaling or a dynamic signaling.

In some embodiments, the semi-static signaling is an SBFD symbol configuration signaling.

In some embodiments, the dynamic signaling is a DL DCI signaling.

For example, as shown in FIG. 2b, symbols #2 to #13 are used by the RO in slot #1. One RO contains 6 OFDM symbols (OSs) and the Ngap is 2. For example, symbols #0 to #12 in slot #1 may overlap with symbols for the valid RO and its preceding Ngap symbols. For example, receiving the second signaling is not expected. The second signaling is used to configure SBFD symbols in the symbols #0 to #12 in slot #1 as DL. It should be noted that if the SBFD symbols are configured as DL, there will be no UL symbol that may be used for random access in the corresponding SBFD symbols. In embodiments of the disclosure, since the UE does not expect to receive the second signaling, the network device may not configure the SBFD symbols as DL via the second signaling. In this way, the UE may perform random access in the SBFD symbols. For example, when one or more symbols where the valid RO is located and its preceding Ngap symbols contain SBFD symbols, the UE does not expect that the valid RO and SBFD symbols overlap outside the UL transmission frequency range, such as not expecting that the valid RO contains RO#1 and RO#3.

It should be noted that the execution order of the steps S2101 and S2102 is not limited. The step S2101 may be executed first, or the step S2102 may be executed first. The configuration signaling for the first information in the step S2101 may also be the first signaling in the step S2102. That is, the steps S2101 and S2102 may be implemented by the same signaling, such as an RRC signaling.

In some embodiments, if an RO is configured in a DL symbol, it is determined that the RO is an invalid RO; if an RO is configured in an SBFD symbol, the RO may be a valid RO; or if an RO is configured in an SBFD symbol and a frequency-domain range of the RO is within a UL subband, the RO may be a valid RO.

At S2103, the network device sends a third signaling message to the UE.

In some embodiments, the UE receives the third signaling sent by the network device.

In some embodiments, the third signaling indicates a third resource.

In some embodiments, the third signaling indicates a fourth resource.

In some embodiments, the third signaling may be the same configuration information or indication information as the first information. That is, the network device may include the third signaling and the first information in the same information or signaling and send them to the UE. This is not limited here.

In some embodiments, the third signaling is distinct from the signaling used to send the first information, which means that the third signaling is not sent together with the first information via the same signaling.

In some embodiments, a third resource set and a fourth resource set are determined according to the first resource set.

In some embodiments, the third resource set includes at least one third resource.

In some embodiments, the third resource is a resource in the first resource set that is actually used for PRACH transmission.

In some embodiments, the fourth resource set includes at least one fourth resource.

In some embodiments, the fourth resource is a resource in the first resource set other than the third resource.

For example, the first resource is a valid RO, which may be referred to as a nominal valid RO.

For example, a valid RO actually used for PRACH transmission in the nominal valid ROs is an actual valid RO (third resource), and remaining valid ROs are the fourth resources.

At S2104, the UE performs a processing operation.

In some embodiments, if it is determined that the third resource and the second resource overlap with a time unit for transmitting a DL signal, reception of the DL signal is canceled.

For example, the actual valid RO and its preceding Ngap symbols overlap with a symbol corresponding to the DL signal, and the reception of the DL signal is thus canceled.

In some embodiments, in the case that a time unit where the third resource is located is determined to be the SBFD time unit, and the time unit where the third resource and the second resource overlap with the time unit for transmitting the DL signal, the DL signal is received.

For example, if a symbol where the actual valid RO is located is an SBFD symbol, and the actual valid RO and its preceding Ngap symbols overlap with a symbol corresponding to the DL signal, then the UE may receive the DL signal or the UE may receive a high-priority DL signal.

In some embodiments, in the case that a time unit where the fourth resource is located is determined to be the SBFD time unit, and the fourth resource and the second resource overlap with the time unit for transmitting the DL signal, the DL signal is received.

For example, the fourth resource may be a nominal valid RO other than the actual valid RO in the first resource. The symbol where the nominal valid RO is located is the SBFD symbol. The nominal valid RO and its preceding Ngap symbols overlap with a symbol corresponding to the DL signal. The UE may receive the DL signal or the UE may receive a high-priority DL signal.

For example, as shown in FIG. 2c, PDSCH#2 reception is canceled. For example, PDSCH#2 reception is performed. For example, when PDSCH#2 is used to transmit a high-priority DL signal, PDSCH#2 reception is performed. For example, PDSCH#1 reception is performed. For example, when PDSCH#1 is used to transmit a high-priority DL signal, PDSCH#1 reception is performed. It should be noted that when PDSCH#1 transmission overlaps with the nominal valid RO, PDSCH#1 reception may be performed, and thus there is no action to cancel the PDSCH#1 reception; when PDSCH#2 transmission overlaps with the actual valid RO, PDSCH#2 reception may be not performed, therefore there is an action to cancel the PDSCH#2 reception.

In some embodiments, in the case that a time unit where the first resource is located is the SBFD time unit, and the first resource and the second resource overlap with a time unit for transmitting the DL signal, the DL signal is received.

For example, a symbol for the valid RO is an SBFD symbol, and the valid RO and its preceding Ngap symbols overlap with a symbol corresponding to the DL signal. The UE may receive the DL signal or the UE may receive the high-priority DL signal.

In some embodiments, receiving the DL signal includes: receiving the DL signal according to a priority of the DL signal.

In some embodiments, receiving the DL signal according to the priority of the DL signal includes: receiving a high-priority DL signal, in which the high-priority DL signal includes at least one of: a DL signal indicated by DCI or a DL ultra-reliable low-latency communications (URLLC) signal.

In some embodiments, canceling reception of the DL signal may be canceling reception of a low-priority DL signal.

In some embodiments, the DL signal indicated by DCI refers to a high-priority DL signal in the first PDSCH transmission among multiple PDSCH transmissions indicated by the DCI. The multiple PDSCH transmissions indicated by the DCI includes at least one of: PDSCH transmissions with repetition, semi-persistent scheduled (SPS) PDSCH transmissions with or without repetition, and PDSCH transmissions scheduled by a single DCI.

In some embodiments, the term "information" may be used interchangeably with the terms such as "message", "signal", "signaling", "report", "configuration", "indication", "instruction", "command", "channel", "parameter", "field", and "data".

In some embodiments, the term "send" may be used interchangeably with terms such as "transmit", or "report".

The information indication method involved in embodiments of the disclosure may include at least one of the steps S2101 to S2104. For example, the step S2101 may be implemented as an independent embodiment, the step S2102 may be implemented as an independent embodiment, the step S2103 may be implemented as an independent embodiment, or the step S2104 may be implemented as an independent embodiment. For example, the step S2101 combined with the step S2104 may be implemented as an independent embodiment, the step S2102 combined with the step S2104 may be implemented as an independent embodiment, or the step S2103 combined with the step S2104 may be implemented as an independent embodiment, which is not limited herein.

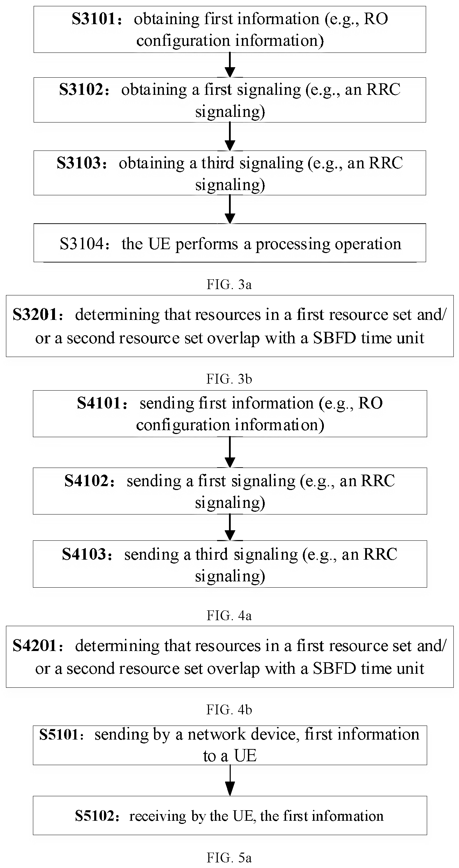

FIG. 3a is a flowchart illustrating a communication method according to an embodiment of the disclosure. As shown in FIG. 3a, the communication method in embodiments is performed by UE 101. The method includes the following steps at S3101-3104.

At S3101, first information is obtained.

In some embodiments, optional implementations of the step S3101 may be found in optional implementations of the step S2101 in FIG. 2a and other related parts in embodiments involved in FIG. 2a, which will not be repeated here.

In some embodiments, the UE receives the first information sent by the network device, but is not limited herein; and the UE may also receive first information sent by other entities.

In some embodiments, the UE obtains the first information as defined by a protocol.

In some embodiments, the UE obtains the first information from an upper layer(s).

In some embodiments, the UE obtains the first information by information processing.

In some embodiments, the step S3101 is omitted, and the UE autonomously implements the function indicated by the first information, or the above function is default.

In some embodiments, the UE may determine, according to a predetermined protocol or obtained configuration information, that the resources in the first resource set and/or the second resource set are capable of overlapping with the SBFD time unit.

For example, before the UE receives the first information, the UE may determine, according to the predetermined protocol or configuration information sent by the network device, that the resources in the first resource set and/or the second resource set are capable of overlapping with the SBFD time unit.

At S3102, a first signaling is obtained.

In some embodiments, optional implementations of the step S3102 may be found in optional implementations of the step S2102 in FIG. 2a and other associated parts in embodiments involved in FIG. 2a, which will not be repeated here.

In some embodiments, the UE receives the first signaling sent by the network device, but is not limited herein; and the UE may also receive the first signaling sent by other entities.

In some embodiments, the UE obtains the first signaling as defined by the protocol.

In some embodiments, the UE obtains the first signaling from the upper layer(s).

In some embodiments, the step S3102 is omitted, and the UE autonomously implements the function indicated by the first signaling, or the above function is default.

At S3103, a third signaling is obtained.

In some embodiments, optional implementations of the step S3103 may be found in optional implementations of the step S2103 in FIG. 2a and other related parts in embodiments involved in FIG. 2a, which will not be repeated here.

In some embodiments, the UE receives the third signaling sent by the network device, but is not limited herein; and the UE may also receive the third signaling sent by other entities.

In some embodiments, the UE obtains the third signaling as defined by the protocol.

In some embodiments, the UE obtains the third signaling from the upper layer(s).

In some embodiments, the step S3103 is omitted, and the UE autonomously implements the function indicated by the first signaling, or the above function is default.

At S3104, the UE performs a processing operation.

In some embodiments, optional implementations of the step S3104 may be found in optional implementations of the step S2104 in FIG. 2a and other related parts in embodiments involved in FIG. 2a, which will not be repeated here.

The information indication method involved in embodiments of the disclosure may include at least one of the steps S3101 to S3104. For example, the step S3101 may be implemented as an independent embodiment, the step S3102 may be implemented as an independent embodiment, the step S3103 may be implemented as an independent embodiment, or the step S3104 may be implemented as an independent embodiment. For example, the step S3101 combined with the step S3104 may be implemented as an independent embodiment, the step S3102 combined with the step S3104 may be implemented as an independent embodiment, or the step S3103 combined with the step S3104 may be implemented as an independent embodiment, but not limited herein.

FIG. 3b is a flowchart illustrating a communication method according to an embodiment of the disclosure. As shown in FIG. 3b, embodiments of the disclosure relate to a communication method, performed by the UE 101. The method includes the following step at S3201.

At S3201, it is determined that an overlap between resources in a first resource set and/or a second resource set and a SBFD time unit.

In some embodiments, the first resource set includes at least one first resource; the second resource set includes at least one second resource; the first resource is a time-domain resource and/or frequency-domain resource where a valid RO is located; a time-domain resource of the second resource is a time unit whose resource position is before a resource position of the time-domain resource of the first resource.

In some embodiments, optional implementations of the step S3201 may be found in optional implementations of the step S2101 in FIG. 2a and other related parts in embodiments involved in FIG. 2a, which will not be repeated here.

In some embodiments, the method further includes at least one of: determining, according to a predetermined protocol, that the resources in the first resource set and/or the second resource set are capable of overlapping with the SBFD time unit; or receiving configuration information and determining, according to the configuration information, that the resources in the first resource set and/or the second resource set are capable of overlapping with the SBFD time unit.

In some embodiments, a frequency-domain resource of the second resource is the same as the frequency-domain resource of the first resource.

In some embodiments, the method further includes: receiving first information, in which the first information is configured to determine the first resource set, and a time-domain position of the resources in the first resource set and/or the second resource set overlap with the SBFD time unit.

In some embodiments, the method includes: receiving a first signaling, in which the first signaling indicates that a DL time unit is configured as the SBFD time unit.

In some embodiments, the method further includes: determining that the UE does not expect that the SBFD time unit included in the first resource and/or the second resource is configured as a DL time unit.

In some embodiments, determining that the UE does not expect that the SBFD time unit included in the first resource and/or the second resource is configured as the DL time unit includes: determining that the UE does not expect to receive a second signaling, in which the second signaling is used to configure the SBFD time unit included in the first resource and/or the second resource as the DL time unit.

In some embodiments, the method further includes: determining that the UE does not expect that the frequency-domain resource of the first resource and a frequency-domain resource of the second resource overlap with a non-UL transmission frequency range in the SBFD time unit.

In some embodiments, determining that the UE does not expect that the frequency-domain resource of the first resource and/or the frequency-domain resource of the second resource overlap with the non-UL transmission frequency range in the SBFD time unit includes: determining that the first resource and the second resource comprise the SBFD time unit, and determining that the UE does not expect that the frequency-domain resource of the first resource and the frequency-domain resource of the second resource overlap with the non-UL transmission frequency range in the SBFD time unit.

In some embodiments, the first signaling is a semi-static signaling or a dynamic signaling, and/or the second signaling is a semi-static signaling or a dynamic signaling.

In some embodiments, the semi-static signaling is an SBFD symbol configuration signaling.

In some embodiments, the dynamic signaling is a downlink control information (DCI) signaling.

In some embodiments, the method further includes: determining, according to the first resource set, a third resource set and a fourth resource set. The third resource set includes at least one third resource, the third resource is a resource in the first resource set actually used for PRACH transmission; the fourth resource set includes at least one fourth resource, the fourth resource is a resource in the first resource set other than the third resource.

In some embodiments, the method further includes one of: determining that the third resource and/or the second resource overlap with a time unit for transmitting a DL signal, and canceling reception of the DL signal: or determining that a time unit where the third resource is located is the SBFD time unit, and the third resource and/or the second resource overlap with a time unit for transmitting a DL signal, and receiving the DL signal.

In some embodiments, the method further includes: determining that a time unit where the fourth resource is located is the SBFD time unit, and the fourth resource and/or the second resource overlap with a time unit for transmitting a DL signal, and receiving the DL signal.

In some embodiments, the method further includes: determining that a time unit where the first resource is located is the SBFD time unit, and the first resource and/or the second resource overlap with a time unit for transmitting a DL signal, and receiving the DL signal.

In c some embodiments, receiving the DL signal includes: receiving the DL signal according to a priority of the DL signal.

In some embodiments, receiving the DL signal according to the priority of the DL signal includes: receiving a high-priority DL signal, in which the high-priority DL signal comprises at least one of a DL signal indicated by DCI, or a DL URLLC signal.

In some embodiments, the UE may determine, according to the predetermined protocol or obtained configuration information, that the resources in the first resource set and/or the second resource set are capable of overlapping with the SBFD time unit.

For example, before the UE receives the first information, the UE may determine, according to the predetermined protocol or configuration information sent by the network device, that the resources in the first resource set and/or the second resource set are capable of overlapping with the SBFD time unit.

FIG. 4a is a flowchart illustrating a communication method according to an embodiment of the disclosure. As shown in FIG. 4a, the communication method in embodiments is performed by network device 102. The method includes the following steps at S4101-S4103.

At S4101, first message is sent.

In some embodiments, optional implementations of the step S4101 may be found in optional implementations of the step S2101 in FIG. 2a and other related parts in embodiments involved in FIG. 2a, which will not be repeated here.

In some embodiments, the network device may determine according to the predetermined protocol or configure the resources in the first resource set and/or the second resource set are capable of overlapping with the SBFD time unit.

For example, before the network device sends the first information, the network device may configure according to the predetermined protocol or configure the resources in the first resource set and/or the second resource set are capable of overlapping with the SBFD time unit.

At S4102, a first signaling is sent.

In some embodiments, optional implementations of the step S4102 may be found in optional implementations of the step S2102 in FIG. 2a and other related parts in embodiments involved in FIG. 2a, which will not be repeated here.

At S4103, a third signaling is sent.

In some embodiments, optional implementations of the step S4103 may be found in optional implementations of the step S2103 in FIG. 2a and other related parts in embodiments involved in FIG. 2a, which will not be repeated here.

The information indication method involved in embodiments of the disclosure may include at least one of the steps S4101 to S4103. For example, the step S4101 may be implemented as an independent embodiment, the step S4102 may be implemented as an independent embodiment, or the step S4103 may be implemented as an independent embodiment. For example, the step S4101 combined with the step S4102 may be implemented as an independent embodiment, the step S4102 combined with the step S4103 may be implemented as an independent embodiment, or the step S4101 combined with the step S4103 may be implemented as an independent embodiment, but not limited herein.

FIG. 4b is a flowchart illustrating a communication method according to an embodiment of the disclosure. As shown in FIG. 4b, embodiments of the disclosure relate to a communication method, performed by a network device 102. The method includes the following step at S4201.

At S4201, it is determined an overlap between resources in a first resource set and/or a second resource set and a SBFD time unit.

In some embodiments, the first resource set includes at least one first resource; the second resource set includes at least one second resource; the first resource is a time-domain resource and/or frequency-domain resource where a valid RO is located; a time-domain resource of the second resource is a time unit whose resource position is before a resource position of the time-domain resource of the first resource.

In some embodiments, optional implementations of the step S4201 may be found in optional implementations of the step S2101 in FIG. 2a and other related parts in embodiments involved in FIG. 2a, which will not be repeated here.

In some embodiments, the method further includes: sending configuration information, in which the configuration information is used by the UE to determine whether the resources in the first resource set and/or the second resource set are capable of overlapping with the SBFD time unit.

In some embodiments, a frequency-domain resource of the second resource is the same as the frequency-domain resource of the first resource.

In some embodiments, the method further includes: sending first information, in which the first information is configured to determine the first resource set, and a time-domain position of the resources in the first resource set and/or the second resource set overlap with the SBFD time unit.

In some embodiments, the method includes: sending a first signaling, in which the first signaling indicates that a DL time unit is configured as the SBFD time unit.

In some embodiments, the first signaling is a semi-static signaling or a dynamic signaling.

In some embodiments, the semi-static signaling is an SBFD symbol configuration signaling.

In some embodiments, the dynamic signaling is a DCI signaling.

In some embodiments, the network device may determine according to the predetermined protocol or configure the resources in the first resource set and/or the second resource set are capable of overlapping with the SBFD time unit.

For example, before the network device sends the first information, the network device may configure according to the predetermined protocol or configure the resources in the first resource set and/or the second resource set are capable of overlapping with the SBFD time unit.

FIG. 5a is a flowchart illustrating a communication method according to an embodiment of the disclosure. As shown in FIG. 5a, embodiments of the disclosure relate to a communication method, which is performed by a communication system. The method includes the following steps at S5101-S5102.

At S5101, a network device sends first information to a UE.

At S5102, the UE receives the first information.

The first information is used to determine the first resource set, and a time-domain position of the resources in the first resource set and/or the second resource set overlap with the SBFD time unit.

In some embodiments, optional implementations of the step S5101 may be found in optional implementations of the step S2101 in FIG. 2a and other related parts in embodiments involved in FIG. 2a, which will not be repeated here.

To better understand embodiments of the disclosure, the following exemplary embodiment may be used to further illustrate the technical solutions of the disclosure.

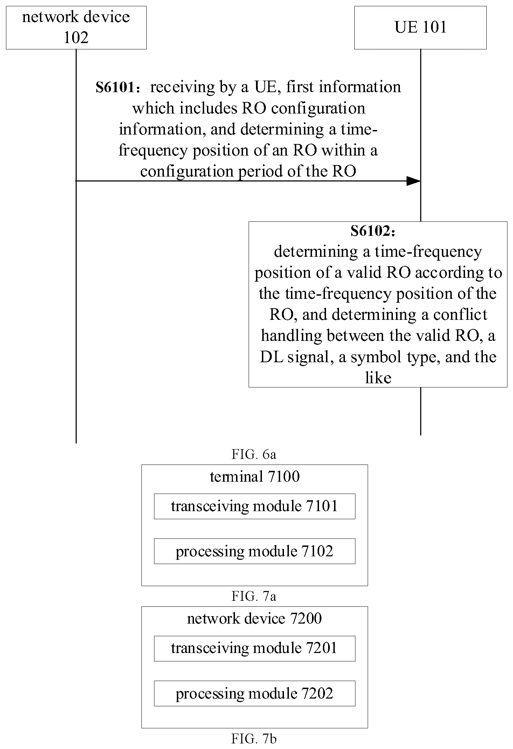

FIG. 6a is a flowchart illustrating a communication method according to an embodiment of the disclosure. As shown in FIG. 6a, embodiments of the disclosure relate to a communication method performed by a communication system. The method includes the following steps at S6101-S6102.

At S6101, a UE receives first information which includes RO configuration information, and determines a time-frequency position of an RO within a configuration period of the RO according to the RO configuration information.

At S6102, a time-frequency position of a valid RO is determined according to the time-frequency position of the RO, and a conflict handling between the valid RO, a DL signal, a symbol type, and the like is determined.

In some embodiments, Scheme 1 is provided for a conflict update between a symbol direction configuration and a valid RO.

In some embodiments, Scheme 1-1 is provided as follows.

In some embodiments, in the time domain,
in an example, the DL symbol is configured via tdd-UL-DL-ConfigurationCommon;
in another example, the DL symbol is configured via tdd-UL-DL-ConfigurationDedicated;
in another example, the DL symbol is configured via DCI format 2-0 indication.

In an example, the UE does not expect that for a valid RO and its preceding Ngap symbols, an SBFD symbol is indicated as a DL symbol through a dynamic signaling.

In another example, the UE does not expect that for a valid RO and its preceding Ngap symbols, an SBFD symbol is indicated as a DL symbol through a semi-static signaling.

In some embodiments, in the frequency domain,
for example, when symbols where the valid RO is located and Ngap symbols before the symbols where the valid RO is located contain an SBFD symbol, the UE does not expect that a frequency-domain range at the valid RO overlaps with a non-UL transmission frequency range in the SBFD symbol.

For example, the SBFD symbol is configured by a semi-static signaling and/or indicated by a dynamic signaling.

In an example, reference to FIG. 2b is made again: symbols #2 to #13 in slot #1 are used by an RO, one RO contains 6 OSs and Ngap is 2.

For example, the symbols #0 to #12 in the slot #1 may overlap with the valid RO and its preceding Ngap symbols.

For example, the UE does not expect that an SBFD symbol in the symbols #0 to #12 in the slot #1 will be statically configured as DL or dynamically indicated as DL.

For example, when symbols where the valid RO is located and Ngap symbols before the symbols where the valid RO is located contain an SBFD symbol, the UE does not expect that the valid RO overlaps with the SBFD symbol outside the UL transmission frequency range, such as not expecting that the valid RO contains RO#1 and RO#3.

In some embodiments, Scheme 2 is provided for a conflict between a DL signal and a valid RO.

In some embodiments, Scheme 2-1 is provided that valid ROs (which may be called a nominal valid RO are configured, including a valid RO (which may be called an actual valid RO) actually used for PRACH transmission

In some embodiments, it is configured as the actual valid RO.

In an example, the actual valid RO and its preceding Ngap symbols overlap with the DL signal, thus canceling reception of the DL signal.

In another example, in the case that a symbol where the actual valid RO is located is an SBFD symbol, and the actual valid RO and its preceding Ngap symbols overlap with the DL signal, the UE may receive a DL signal for example, and the UE may receive a high-priority DL signal for another example.

In an embodiment, it is configured as the nominal valid RO. In the case that a symbol where the nominal valid RO is located is an SBFD symbol, and the nominal valid RO and its preceding Ngap symbols overlap with the DL signal, the UE may receive a DL signal for example, and the UE may receive a high-priority DL signal for another example.

Reference to FIG. 2c is made again, reception of the PDSCH#2 is canceled in an example.

In another example, reception of the PDSCH#2 is performed.

In another example, when a high-priority DL signal is transmitted on the PDSCH#2, reception of the PDSCH#2 is performed.

In another example, reception of the PDSCH#1 is performed.

In another example, when a high-priority DL signal is transmitted on the PDSCH#1, reception of the PDSCH#1 is performed.

In some embodiments, Scheme 2-2 is provided. In the case that a symbol where the valid RO is located is an SBFD symbol, and the valid RO and its preceding Ngap symbols overlap with the DL signal, the UE may receive a DL signal for example, and the UE may receive a high-priority DL signal for another example.

In some embodiments, the high-priority DL signal includes: a DL signal indicated by DCI and a DL URLLC signal. The high-priority DL signal refers to the first PDSCH transmission among multiple PDSCH transmissions indicated by one DCI, and the multiple PDSCH transmissions indicated by one DCI include PDSCH repetition, SPS PDSCH with/without repetition, and multiple PDSCHs scheduled by a single DCI.

In embodiments of the disclosure, some or all of the steps and their optional implementations may be arbitrarily combined with some or all of the steps in other embodiments, or may be arbitrarily combined with the optional implementations in other embodiments.

In embodiments of the disclosure, some or all of the steps and their optional implementations may be arbitrarily combined with some or all of the steps in other embodiments, or may be arbitrarily combined with the optional implementations in other embodiments.

The embodiments of the disclosure are directed to the situation where for passive IoT UEs, different UE types and different capacitor sizes may affect and an interval between data transmissions. The embodiments of the disclosure define the data transmission capabilities of the UEs and reports them to the network side, assisting the network side in effectively triggering the UE to report data.

Embodiments of the disclosure also provide an apparatus for implementing any one of the above methods. For example, an apparatus is provided, including units for performing the steps executed by the UE in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7a is a block diagram of a UE according to an embodiment of the disclosure. As shown in FIG. 7a, the UE 7100 may include at least one of: a transceiver module 7101, a processing module 7102, etc. In some embodiments, the above transceiver module is used to receive first information. Optionally, the transceiver module is used to perform at least one of the communication steps (such as step S2102, step S2103, but not limited herein) performed by the UE 101 in any of the above methods, which will not be repeated here. Optionally, the above processing module is used to perform at least one of the other steps (e.g., step S2101) performed by the UE 101 in any of the above methods, which will not be repeated here.

FIG. 7b is a block diagram of a network device according to an embodiment of the disclosure. As shown in FIG. 7b, the network device 7200 may include at least one of: a transceiver module 7201, a processing module 7202, etc. In some embodiments, the above transceiver module is used to send first information. Optionally, the transceiver module is used to perform at least one of the communication steps (such as step S2102, step S2103, but not limited herein) performed by the network device 102 in any of the above methods, which will not be repeated here. Optionally, the above processing module is used to perform at least one of the other steps (e.g., step S2101) performed by the network device 102 in any of the above methods, which will not be repeated here.

In some embodiments, the processing module may be a single module or may include a plurality of submodules. Optionally, the above submodules may each execute all or part of the steps performed by the processing module. Optionally, the processing module may be interchanged with the processor.

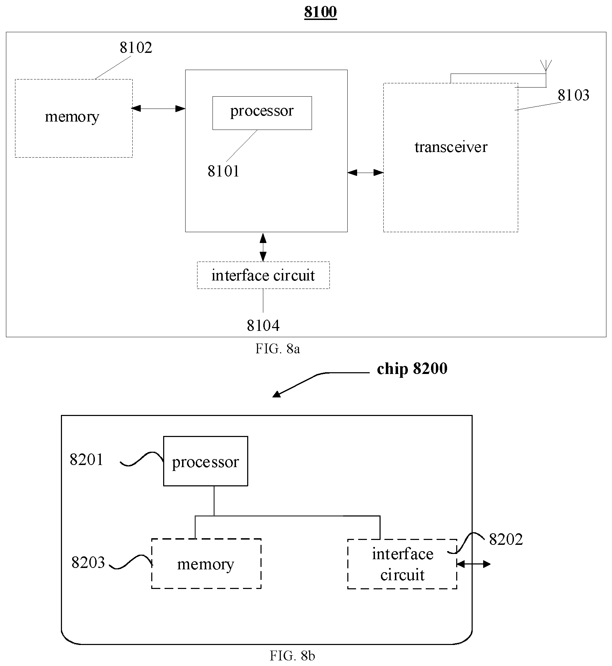

FIG. 8a is a block diagram of a communication device 8100 according to an embodiment of the disclosure. The communication device 8100 may be a network device (such as an access network device, a core network device, etc.), or a UE (such as a UE, etc.), or a chip, a chip system, a processor, etc. that supports the network device to implement any one of the methods, or a chip, a chip system, a processor, etc. that supports the UE to implement any one of the methods. The communication device 8100 may be configured to implement the method in the above method embodiments. For details, please refer to the description in the above method embodiments.

As shown in FIG. 8a, the communication device 8100 may include one or more processors 8101. The processor 8101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a UE, a UE chip, a DU or a CU, etc.), execute computer programs, and process computer program data. The communication device 8100 is configured to execute any one of the above methods.

Optionally, the communication device 8100 further includes one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method (for example, step S2101, step S2102, but not limited herein), and the processor 8101 performs at least one of other steps (for example, step S2102, but not limited herein).

In some embodiments, the transceiver may include a receiver and a transmitter, which may be separate or integrated together. Optionally, terms such as transceiver, transceiver unit, transceiving circuit, etc. may be used interchangeably; terms such as transmitter, transmission unit, transmitting circuit, etc. may be used interchangeably; and terms such as receiver, reception unit, receiving circuit, etc. may be used interchangeably.

In some embodiments, the communication device 8100 further includes one or more interface circuits 8104. Optionally, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a UE, but a scope of the communication device 8100 in the disclosure is not limited to this, and a structure of the communication device 8100 may not be limited by FIG. 8a. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a UE, an intelligent UE, a cellular phone, a wireless device, a handheld phone, a mobile unit, a vehicle-mounted device, a network device, a cloud device, an artificial intelligence device, etc.; 6) others.

FIG. 8b is a block diagram of a chip 8200 according to an embodiment of the disclosure. For a case where the communication device 8100 may be a chip or a chip system, reference may be made to the block diagram of the chip 8200 shown in FIG. 8b, but not limited to this.

The chip 8200 includes one or more processors 8201. The chip 8200 is configured to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send signals to the memory 8203 or other devices. For example, the interface circuit 8202 may read the instructions stored in the memory 8203 and send the instructions to the processor 8201.

In some embodiments, the interface circuit 8202 performs at least one of the communication steps such as sending and/or receiving in the above method (for example, step S2101, step S3101, but not limited herein), and the processor 8201 performs at least one of the other steps (for example, step S2101, step S2102, but not limited herein).

In some embodiments, terms such as interface circuit, interface, transceiver pin, transceiver, etc. may be used interchangeably.

In some embodiments, the chip 8200 further includes one or more memories 8203 for storing instructions. Optionally, all or some of the memories 8203 may be located outside the chip 8200.

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the computer program is running on a computer, the computer is caused to implement any one of the above methods.

## Claims

1. A communication method, performed by a user equipment (UE), the method comprising:
determining an overlap between resources in a first resource set and/or a second resource set and a subband full duplex (SBFD) time unit;
wherein the first resource set comprises at least one first resource: the second resource set comprises at least one second resource; the first resource is a time-domain resource and/or a frequency-domain resource where a valid random access channel occasion (RO) is located; and a time-domain resource of the second resource is a time unit whose resource position is before a resource position of the time-domain resource of the first resource.

2. The method according to claim 1, further comprising at least one of:
determining, according to a predetermined protocol, that the resources in the first resource set and/or the second resource set are capable of overlapping with the SBFD time unit; or
receiving configuration information and determining, according to the configuration information, that the resources in the first resource set and/or the second resource set are capable of overlapping with the SBFD time unit.

3. The method according to claim 1, wherein a frequency-domain resource of the second resource is the same as the frequency-domain resource of the first resource.

4. The method according to claim 1, further comprising:
receiving first information, wherein the first information is configured to determine the first resource set, and a time-domain position of the resources in the first resource set and/or the second resource set overlaps with the SBFD time unit.

5. The method according to claim 1, comprising:
receiving a first signaling, wherein the first signaling indicates that a downlink (DL) time unit is configured as the SBFD time unit.

6. The method according to claim 1, further comprising:
determining that the UE does not expect that the SBFD time unit comprised in the first resource and/or the second resource is configured as a downlink (DL) time unit.

7. The method according to claim 5, wherein determining that the UE does not expect that the SBFD time unit comprised in the first resource and/or the second resource is configured as the DL time unit comprises:
determining that the UE does not expect to receive a second signaling, wherein the second signaling is used to configure the SBFD time unit comprised in the first resource and/or the second resource as the DL time unit.

8. The method according to claim 1, further comprising:
determining that the UE does not expect that the frequency-domain resource of the first resource and/or a frequency-domain resource of the second resource overlap with a non-uplink (UL) transmission frequency range in the SBFD time unit.

9. The method according to claim 8, wherein determining that the UE does not expect that the frequency-domain resource of the first resource and/or the frequency-domain resource of the second resource overlap with the non-UL transmission frequency range in the SBFD time unit comprises:
determining that the first resource and the second resource comprise the SBFD time unit, and determining that the UE does not expect that the frequency-domain resource of the first resource and the frequency-domain resource of the second resource overlap with the non-UL transmission frequency range in the SBFD time unit.

10. The method according to claim 5 or 7, wherein the first signaling is a semi-static signaling or a dynamic signaling, and/or the second signaling is a semi-static signaling or a dynamic signaling.

11. The method according to claim 10, wherein the semi-static signaling is an SBFD symbol configuration signaling.

12. The method according to claim 11, wherein the dynamic signaling is a downlink control information (DCI) signaling.

13. The method according to claim 1, comprising:
determining, according to the first resource set, a third resource set and a fourth resource set;
wherein the third resource set comprises at least one third resource, the third resource is a resource in the first resource set actually used for physical random access channel (PRACH) transmission; the fourth resource set comprises at least one fourth resource, the fourth resource is a resource in the first resource set other than the third resource.

14. The method according to claim 13, further comprising one of:
determining that the third resource and/or the second resource overlap with a time unit for transmitting a downlink (DL) signal, and canceling reception of the DL signal; or
determining that a time unit where the third resource is located is the SBFD time unit, and the third resource and/or the second resource overlap with a time unit for transmitting a DL signal, and receiving the DL signal.

15. The method according to claim 13, further comprising:
determining that a time unit where the fourth resource is located is the SBFD time unit, and the fourth resource and/or the second resource overlap with a time unit for transmitting a downlink (DL) signal, and receiving the DL signal.

16. The method according to claim 1, further comprising:
determining that a time unit where the first resource is located is the SBFD time unit, and the first resource and/or the second resource overlap with a time unit for transmitting a downlink (DL) signal, and receiving the DL signal.

17. The method according to claim 14, 15, or 16, wherein receiving the DL signal comprises:
receiving the DL signal according to a priority of the DL signal.

18. The method according to claim 17, wherein receiving the DL signal according to the priority of the DL signal comprises:
receiving a high-priority DL signal, wherein the high-priority DL signal comprises at least one of:
a DL signal indicated by downlink control information (DCI); or
a DL ultra-reliable low-latency communications (URLLC) signal.

19. A communication method, performed by a network device, the method comprising:
determining an overlap between resources in a first resource set and/or a second resource set and a subband full duplex (SBFD) time unit;
wherein the first resource set comprises at least one first resource; the second resource set comprises at least one second resource: the first resource is a time-domain resource and/or a frequency-domain resource where a valid random access channel occasion (RO) is located; and a time-domain resource of the second resource is a time unit whose resource position is before a resource position of the time-domain resource of the first resource.

20. The method according to claim 19, further comprising:
sending configuration information, wherein the configuration information is used by the UE to determine whether the resources in the first resource set and/or the second resource set are capable of overlapping with the SBFD time unit.

21. The method according to claim 19, wherein a frequency-domain resource of the second resource is the same as the frequency-domain resource of the first resource.

22. The method according to claim 19, further comprising:
sending first information, wherein the first information is configured to determine the first resource set, and a time-domain position of the resources in the first resource set and/or the second resource set overlap with the SBFD time unit.

23. The method according to claim 19, comprising:
sending a first signaling, wherein the first signaling indicates that a downlink (DL) time unit is configured as the SBFD time unit.

24. The method according to claim 23, wherein the first signaling is a semi-static signaling or a dynamic signaling.

25. The method according to claim 24, wherein the semi-static signaling is an SBFD symbol configuration signaling.

26. The method according to claim 24, wherein the dynamic signaling is a downlink control information (DCI) signaling.

27. A communication method, performed by a communication system, the method comprising:
sending by a network device, first information to a user equipment (UE), wherein the first information is configured to determine a first resource set, and time-domain positions of resources in the first resource set and/or a second resource set overlap with a subband full duplex (SBFD) time unit; and
receiving by the UE, the first information.

28. A user equipment (UE), comprising:
a processing module, configured to determine an overlap between resources in a first resource set and/or a second resource set and a subband full duplex (SBFD) time unit;
wherein the first resource set comprises at least one first resource; the second resource set comprises at least one second resource: the first resource is a time-domain resource and/or a frequency-domain resource where a valid random access channel occasion (RO) is located; and a time-domain resource of the second resource is a time unit whose resource position is before a resource position of the time-domain resource of the first resource.

29. A network device, comprising:
a processing module, configured to determine an overlap between resources in a first resource set and/or a second resource set and a subband full duplex (SBFD) time unit;
wherein the first resource set comprises at least one first resource; the second resource set comprises at least one second resource; the first resource is a time-domain resource and/or a frequency-domain resource where a valid random access channel occasion (RO) is located; and a time-domain resource of the second resource is a time unit whose resource position is before a resource position of the time-domain resource of the first resource.

30. A communication system, comprising a user equipment (UE) and a network device; the UE is configured to perform the communication method according to any one of claims 1 to 18, and the network device is configured to perform the communication method according to any one of claims 19 to 26.

31. A user equipment (UE), comprising:
one or more processors;
wherein the UE is used to perform the communication method according to any one of claims 1 to 18.

32. A network device, comprising:
one or more processors;
wherein the network device is used to perform the communication method according to any one of claims 19 to 26.

33. A storage medium storing instructions that, when executed on a communication device, cause the communication device to perform the communication method according to any one of claims 1 to 18 and 19 to 26.
